# EUROPEAN PATENT APPLICATION

(11) **EP 1 947 598 A2**
(43) Date of publication of application: **23.07.2008**
(21) Application number: 08100492.1
(22) Date of filing: 15.01.2008
(51) Int. Cl.: G06Q 10/00

(54) **Manufacturing schedule optimisation**

(30) Priority: 15.01.2007 GB 0700745
(71) Applicant: Greycon Ltd., York Road Battersea Greater London SW11 3TN (GB)
(72) Inventor: Goulimis, Constantine, Greater London SW7 5ND (GB)
(74) Representative: Finnie, Peter John

(57) **Abstract**

The invention provides a computer-implemented method for scheduling a manufacturing process for manufacturing a plurality of items, the method comprising: determining costs associated with switching the manufacturing process between different items; determining a set of costs associated with an inventory level for each item deviating outside predefined parameters associated with a demand forecast; determining a set of costs associated with a customer order being delivered outside of a delivery date; determining a set of production costs; determining a set of all possible manufacturing schedules for the combination of products to meet customer demand and the demand forecasts; for each schedule determining a cost; selecting a schedule which acceptably minimises or reduces the determined cost.

## Description

### Field of the Invention

The present invention relates to the optimisation of a manufacturing schedule. The invention is not limited to any particular type of manufacturing. The invention is applicable to any manufactu ring schedule or process which may be optimised to take account of variables.

### Background to the Invention

In any manufacturing industry facing non -constant demand patterns, and whose primary process has significant switchover costs when transitioning fro m one product to another, difficult scheduling problems are encountered. The scheduling problems primarily arise from conflicting objectives. Generating a production or manufacturing schedule with maximum production efficiency can result in very large in ventories being created, which is undesirable. Similarly achieving maximum customer service (i.e. meeting customer order demand) typically requires either large inventories or inefficient utilisation of production assets, neither of which are desirable. Thus whilst it is possible to provide a manufacturing process which optimises one of (i) minimisation of production losses; (ii) maximisation of customer service; or (iii) minimisation of inventory, no solution exists which allows for a manufacturing sched ule which balances all three of these conflicting objectives.

Typically current techniques for scheduling a manufacturing process require manual planning and implementation. The problems associated with the scheduling do not permit an automated solution: the problem is not one of large calculations, but of decision -making based on the results of large calculations. This manual scheduling is time and labour intensive, and results in sub-optimal scheduling.

It is therefore an aim of the present invention to provide an improved technique for scheduling a manufacturing process, which optimises performance.

### Summary of the Invention

In accordance with one aspect the invention provides a computer-implemented method for scheduling a manufacturing process for manufacturing a plurality of items, the method comprising: determining costs associated with switching the manufacturing process between different items; determining a set of costs associated with an inventory level for each item deviating outside predefined parameters associated with a demand forecast; determining a set of costs associated with a customer order being delivered outside of a delivery date; determining a set of production costs; determining a set of all possible manufacturing schedules for the combination of products to meet customer demand and the demand forecasts; for each schedule determining a cost; selecting a schedule which acceptably minimises or reduces the determined cost.

The method does not guarantee a manufacturing schedule having the lowest possible cost (known as exact optimisation). The method provides an acceptable cost which is minimised or reduced. Heuristic algorithms minimise the composite cost.

If a schedule does not meet the various constraints, it may be penalised. The method may further comprise the step, after selecting a schedule, of seeking an improved schedule. The step of seeking an improved schedule may comprise reordering the selected schedule and determining if the reordering reduces the cost.

The set of costs associated with the inventory level may include a penalty costs associated with the inventory level falling below a level which is defined as a percentage of a safety stock level.

In accordance with another aspect of the invention there is provided a computer-implemented method for scheduling a manufacturing process for manufacturing one or more items, comprising: determining a set of input parameters, comprising: determining a set of initial conditions; determining a demand; determining an inventory policy for each item; determining a set of master data; determining a decay factor; processing the input parameters; generating output parameters in dependence on the input parameters, comprising: a manufacturing schedule.

The initial conditions may include an opening inventory for each item. The initial conditions may include pre-defined runs for a subset of the items. The demand may include a daily forecast consumption rate for each item. The demand may include orders.

The step of defining an inventory policy for each item may include defining a maximum level. A first penalty condition may be met if the inventory level for an item exceeds the maximum level. The step of defining an inventory policy for each item may include defining a minimum level. A second penalty condition may be met if the inventory level for an item is less than the minimum level.

The step of defining an inventory policy for each item may include defining an alarm level.

A third penalty condition may be met if the inventory level for an item is less than the alarm level. Te alarm level may be defined as a percentage of the minimum level.

A fourth penalty condition may be met if the inventory level is below zero.

The step of defining an inventory policy may include defining an ea rliness penalty. The step of defining an inventory policy may include defining a lateness penalty. The defined level may be time-varying. The defined penalty may be time-varying.

The step of determining master data may include determining a production ra te for each item and allowing this production rate to vary over time. The step of determining master data may include determining a production cost for each item. The step of determining master data may include planned down-time of the manufacturing process.

The step of determining the decay factor may include penalising parts of the schedule further in the future.

The step of generating output parameters may include generating an inventory replenishment order. The step of generating output parameters m ay include displaying one or more input parameters.

The step of processing the input parameters may include maintaining the inventory level for each item above its defined minimum level and below its defined maximum level.

In accordance with another as pect of the invention there is provided a computer program product for storing computer program code for carrying out any method defined herein. In accordance with the invention there is provided a system for scheduling a manufacturing process for manufacturing a plurality of items, the system comprising: a determinator for determining costs associated with switching the manufacturing process between different items; a determinator for determining a set of costs associated with an inventory level for each item deviating outside predefined parameters associated with a demand forecast; a determinator for determining a set of costs associated with a customer order being delivered outside of a delivery date; a determinator for determining a set of production co sts; a processor for determining a set of all possible manufacturing schedules for the combination of products to meet customer demand and the demand forecasts; wherein for each schedule the processor determines a cost; and wherein the processor selects th e schedule associated with the minimum determined cost.

The processor may transmit the selected schedule to a production controller for controlling the production process.

### Brief Description of the Figures

Examples of the present invention will now be d escribed in detail with reference to the accompanying drawings, in which:
Figure 1 illustrates a forecast for an example stock- keeping unit;
Figure 2 illustrates an example inventory level for the example stock -keeping unit of Figure 1;
Figures 3a to 3c illustrates an exemplary manufacturing process for two families of products , including switchover;
Figures 4a to 4d illustrate examples of typical work centre schedules for manufacturing processes;
Figures 5a to 5c illustrate a manufacturing schedule for a typical multi-machine situation, including a corresponding inventory level for an example product;
Figure 6 illustrates the concept of a demand schedule automation technique in accordance with embodiments of the invention;
Figure 7 illustrates levels ass ociated with an inventory control in accordance with a preferred embodiment of the invention;
Figure 8 illustrates a system architecture for a demand schedule optimisation technique in accordance with embodiments of the invention;
Figure 9 illustrates a flow diagram for a demand schedule optimisation technique in accordance with embodiments of the invention;
Figure 10 illustrates the inputs and outputs of the control process in accordance with embodiments of the invention; and
Figure 11 illustrates a system architecture for implementing embodiments of the invention.

### Detailed Description

A manufacturing process is optimised, in accordance with embodiments of the invention, by recognising the problem associated with two classes of inputs to the manufacturing process. One input is related to demand and inventory policy, and the other input is related to production/manufacturing. Optimising the process includes controlling production/manufacturing to meet a demand and inventory policy.

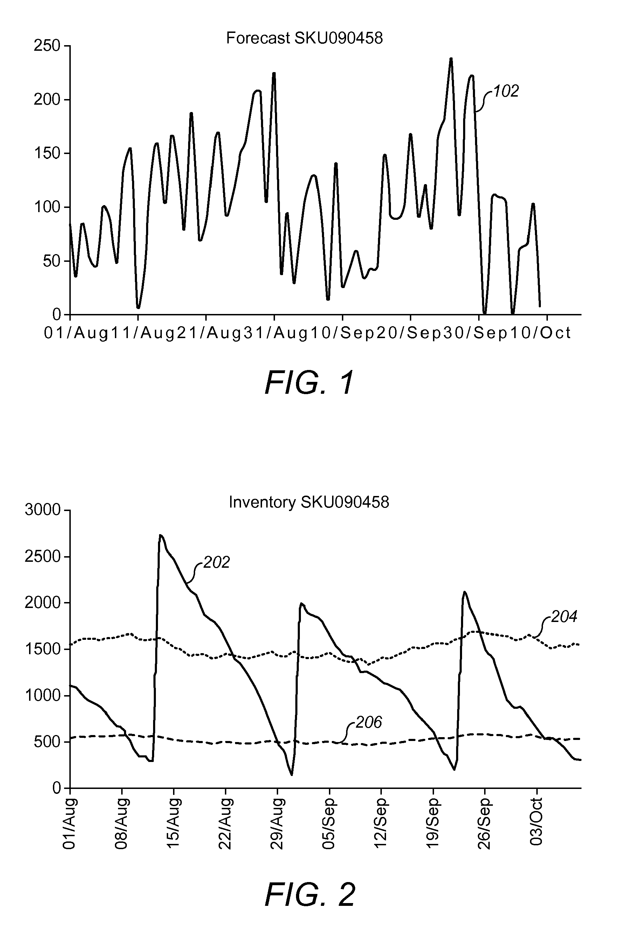

The input associated with demand and inventory policy is discussed first. Figure 1 illustrates a graph plotting, by way of a curve 102, a forecast of consumption for a particular product against time. The graph of Figure 1 illustrates a daily forecast consumption for a given stock-keeping unit (SKU), identified as "SKU090458", for a certain time period.

In a practical manufacturing environment, there may be many thousands of stock-keeping units, each with its own forecast consumption curve as illustrated in Figure 1 for a single stock-keeping unit. The forecast consumption is a prediction or estimate of the demand for a given unit from stock. The initial inventory of each stock-keeping unit will be consumed at a rate dictated by the forecast, until the inventory is replenished by manufacturing.

An objective of the manufacturing schedule is to manufacture the product at an appropriate rate to ensure that stock levels allow the demand from stock to be met.

Referring to Figure 2 there is illustrated a graph of inventory against time, for an equivalent time period of the forecast of Figure 1, showing the inventory. The inventory is the stock level for a given product. As a result of the forecast derived from Figure 1, and the manufacturing process, a saw-tooth curve 202 results from the make-to-stock components of the manufacturing. The saw-tooth curve results from a gradual decline of stock due to consumption consistent with the forecast, interspersed with boosts to stock caused by manufacturing 'runs' of the given product.

As illustrated in Figure 2 , for the inventory level there can be defined a first (low) level 206, known as a minimum inventory target, and a second (high) level 204, known as a maximum inventory target. Each of these targets may be time varying, and ar e illustrated as time varying in Figure 2. Thus the minimum inventory target 206 and the maximum inventory target 204 may vary over time.

The general aim of a manufacturing process from a demand and inventory perspective, is for the inventory level to be maintained above the minimum inventory target 206 and below the maximum inventory target 204, this region typically being referred to as a "tunnel". The minimum inventory target 206 is typically referred to as a "safety stock level" and the maximum inventory target 204 is typically referred to as an "order-up-to" level.

The range determined by the minimum inventory target 206 and the maximum inventory target 204, i.e. the tunnel, is typically called the stock-keeping unit's "inventory policy" or "demand and inventory policy". As illustrated in Figure 2 the values of a demand and inventory policy are typically time varying, but in certain circumstances may be constant.

A common formula is to express a demand and inventory policy as days of cover. The demand and inventory policy defines, for a given time period, a safety stock level which should be exceeded, and an order-up-to stock level which should not be exceeded. The purpose of ensuring a safety stock level is maintained is to ensure there is sufficient inventory to meet any demand. The purpose of maintaining inventory below an order-up-to level is to avoid excessive stock which, for example, incurs storage costs. There are several software vendors providing tools that claim to generate an optimal inventory policy such as illustrated in Figure 2. These tools are generally termed "inventory optimisation" tools. The definition and maintenance of a demand and inventory policy is, however, outside the scope of the present invention. Embodiments of th e present invention may utilise any known inventory optimisation tool.

Thus it is assumed that for any given stock-keeping unit, there is a forecast as exemplified by Figure 1 and a demand and inventory policy as exemplified by Figure 2.

In addition to the make-to-stock demand and inventory policy as discussed hereinabove, demand and inventory may also be affected by a make-to-order component. The make-to-order component takes the form of customer orders, and generally the aim of the manufacturing process is to deliver these as close as possible to a customer requested date, neither too early nor too late.

The second class of input is production, more specifically the production or manufacturing process. For the purpose of example the following discussion assumes a single machine capable of making all the items contained in the demand. In a practical application the production process may be made up of multiple machines, each machine being capable of making one or more product or item.

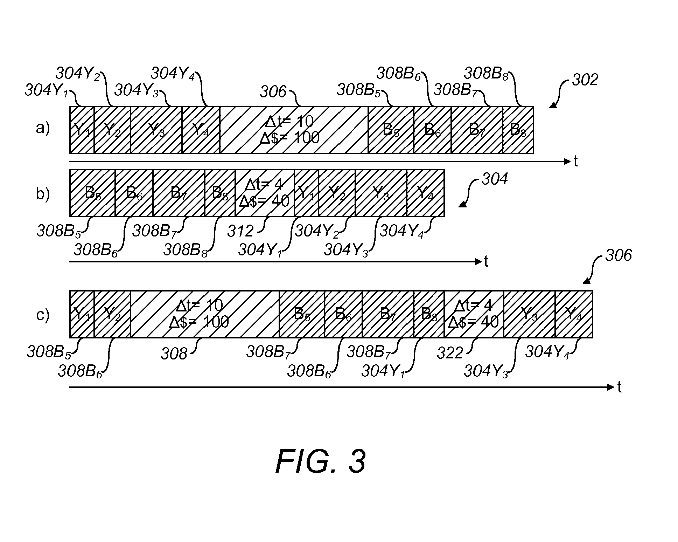

If the production rate for a specific product or item is constant, regardless of the quantity produced, then manufacturing scheduling is relatively straightforward: product ion may be switched from product-to-product in line with demand. In practice, however, there can be significant "setup costs". The presence of these setup costs encourages the grouping together of similar products in order to minimise such costs. Further the set-up costs are typically sequence dependent. This can be understood further with reference to Figures 3a to 3c.

In Figures 3a to 3c there is shown alternative manufacturing schedules for two families of products. A first family of products is identified as Y₁ to Y₄. A second family of products is identified as B₅ to B₈. A setup time is denoted by Δt, and the associated set up cost is denoted by Δ$.

In the first example as illustrated by Figure 3a, a manufacturing sequence 302 comprises a sequential manufacturing sequence for each of the products Y₁ to Y₄ in the first family, in the order of Y₁ to Y₄. Each product has an associated manufacturing time as illustrated by reference numerals 304 _{Y1} to 304_{Y4}. The length of manufacturing time for each product within this family may be different. As illustrated in Figure 3a, for example, the manufacturing time for product Y₁ is less than for other products in the family, and the manufacturing time of product Y₃ is greater than for other products in the family. After a sequence in which all products of the first family have a manufacturing run, the manufacturing process is setup during a time period 306 to manufacture products of the second family. Thereafter there is a sequence of manufacturing for each of the products B₅ to B₈ of the second family in the order B₅ to B₈. Each product of the second family has an associated manufacturing time as illustrated by reference numerals 308_{B5} to 308_{B8}.

It should be noted that in any given manufacturing 'run' the length of the production cycle for any product may vary. However for the purposes of illustration, in Figure 3 for each production cycle shown the production length for any given product remains constant between each manufacturing cycle.

Referring to Figure 3b there is illustrated an example manufacturing sequence 304 in which manufacturing of all products B₅ to B₈ of the second family is carried out in the order B₅ to B₈. After a setup time denoted by block 312 manufacturing of each product Y₁ to Y₄ of the first family is then carried out in the order Y₁ to Y₄.

As can be seen by comparison of Figure 3a with Figure 3b, the setup time period 306 for a changeover from the first family of products to the second family of products is longer than the setup time period 312 for a changeover from the second family of products to the first family of products. The associated setup costs are correspondingly different. As can be understood from a comparison of Figures 3a and 3b, the setup costs can therefore be sequence dependent. To distinguish the case when the setup costs depend on the sequence, they are typically referred to as "switchover costs".

A simplistic approach to the problem of minimising setup costs is to find an optimal sequence that minimises the switchover costs. This problem, and its solution, is well understood and is known as the "asymmetric t ravelling salesman problem" in the operational research and mathematical optimisation literature. Algorithms are available that deal with large instances of this problem. Any resulting solution is cyclical, i.e. there is a preferred sequence of production grades. However such a simplified formulation ignores the requirements for achieving a safety stock level; for not exceeding an order -up-to level; and for meeting customer demand. Such a simplified approach cannot handle minimum run -length constraints and time-varying demand patterns.

The two objectives of minimum inventory (i.e. production) and maximum customer service (i.e. meeting customer demand) are the objectives that require fundamental changes to a manufacturing schedule. The presence of these objectives means that the problem is no longer a "travelling salesman" one. This can be further understood with reference to Figure 3c. Customer service urgencies may require the production of some products of the first family, followed by some products of the second family. This causes two setups in the overall schedule instead of just one. Referring to Figure 3c it can be seen that in a production schedule 306 a first product Y₁ and a second product Y₂ of the first family are manufactured in sequence. Thereafter due to customer service urgencies it is necessary to manufacture products of the second family, and a setup or switchover takes place as denoted by block 318. Each of the products B₅ to B₈ of the second family are then manufactured in sequence. After completion of this phase of manufacturing of the product of the second family, a second setup or changeover takes place as denoted by block 322. Thereafter the third and fourth products, Y₃ and Y₄, of the first family are manufactured. Thus as can be seen in Figure 3c the manufacturing process 306 to complete a manufacturing cycle of each product of each family in such instances includes two sets of setup or changeover costs.

The same effect as illustrated in Figure 3c could also be caused b y inventory constraints, such as limited warehouse capacity, which may preclude making the third and fourth products Y₃ and Y₄ of the second family at the same time as making the first and second products Y₁ and Y₂ of the first family. Such inventory cons traints may be defined by the order-up-to stock level.

From the above discussion it can be understood, therefore, that the complexities of the manufacturing process result in the defining of a demand and inventory policy for any product being a complex problem. This complexity is exacerbated in practice by a typical manufacturing process involving the manufacture of multiple products on multiple manufacturing lines.

In the manufacturing environments in which embodiments of the present invention may be advantageously applied, the following typical characteristics can be identified:
1. The manufacturing process typically uses high-value work centres, such as paper machines, non-woven machines, extruders etc. Typically these work centres are also of sufficiently high capital value and other attributes to require 7 day, 24 hour production.
2. The manufacturing process has setup or switchover costs that are significant.
3. Product items are typically grouped into families, with setup costs within a family typically being negligible or zero, but with transitions between families typically being expensive. In the paper industry, for example, there can be a demand for many different reel and sheet sizes, but for the same material (colour, grade and basis weight).

With an understanding of the above-stated typical problems encountered in a typical manufacturing environment, the objectives of a demand schedule optimisation technique in accordance with the embodiments of the invention can be set out. The objectives of the demand schedule optimisation are:
1. Deviations from the demand and inventory policy for make-to-stock items should be minimised, with particular attention to not going below a zero inventory level.
2. Items to be made-to-order should be delivered as close as possible to the requested date for delivery.
3. Production should be efficient, with particular attention to minimising setup or switchover costs, and allocation of production to meet demand (either to-stock or to-order) to the most cost-effective manufacturing resource.

As discussed above, these objectives are conflicting.

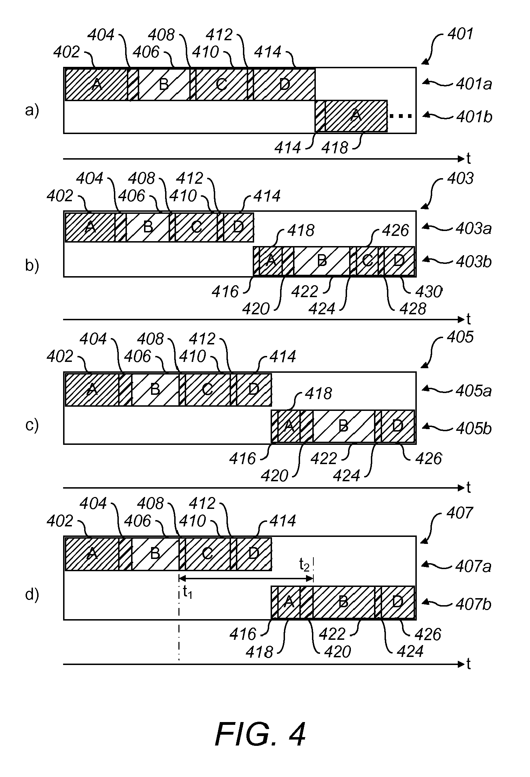

In current typical manufacturing facilities, manufacturing schedules are defined manually by a team of "master planners" who define a "block schedule" for each work centre. This block schedule is essentially a time period during which one particular product family (possibly many stock-keeping units) is made. The frequency and extent of these runs is determined empirically, often repeating previous cycles. The manufacturing run for any product during this block schedule must be sufficient to replenish stocks to meet demand until the next manufacturing run of that product. This can be understood further with reference to Figure 4.

Figure 4a illustrates a repeating cycle of product family A denoted by reference numeral 402, product family B denoted by reference numeral 406, product family C denoted by reference numeral 410, and product family D denoted by reference numeral 414. As seen in Figure 4a a first manufactu ring cycle 401 a includes setup or changeover periods between each product family. A setup period 404 is required to switch from product family A to product family B, a setup period 408 is required to switch from product family B to product family C, a setup period 412 is required to switch from product family C to product family D. A setup period 416 is required to switch from product family D to the beginning of a second cycle of product family A in a subsequent manufacturing cycle 401b.

As illustrated in Figure 4b, a second manufacturing cycle 403b of a manufacturing process 403 may have different run lengths than a first cycle 403a. In the example of Figure 4b the run length for product A from a first cycle 403a as denoted by reference numeral 402 is reduced in the second cycle 403b as denoted by reference numeral 418. As illustrated in Figure 4c, in any particular manufacturing cycle one or more products may not be present. In the example of Figure 4c the product family C included in a first cycle 405 a is omitted in a second manufacturing cycle 405b. In such a scenario a manufacturing process 405 is not truly cyclical, as each cycle does not contain all product families.

Once a block schedule such as illustrated in any one of Figures 4a to 4c is crea ted, then associated inventory replenishment orders may be generated. The fundamental principle of the process can be understood by reference to Figure 4d. At a time t₁ the manufacturing of products of family B for a given manufacturing cycle 407a are com pleted. The manufacturing of products of family B does not recommence until a time t₂ of the next manufacturing cycle 407b (or of a further manufacturing cycle). The inventory for products of family B at time t₁ must therefore be sufficient to cover all demand for those products until time t₂. This demonstrates how the magnitude of the inventory replenishment orders depends upon the manufacturing schedule itself.

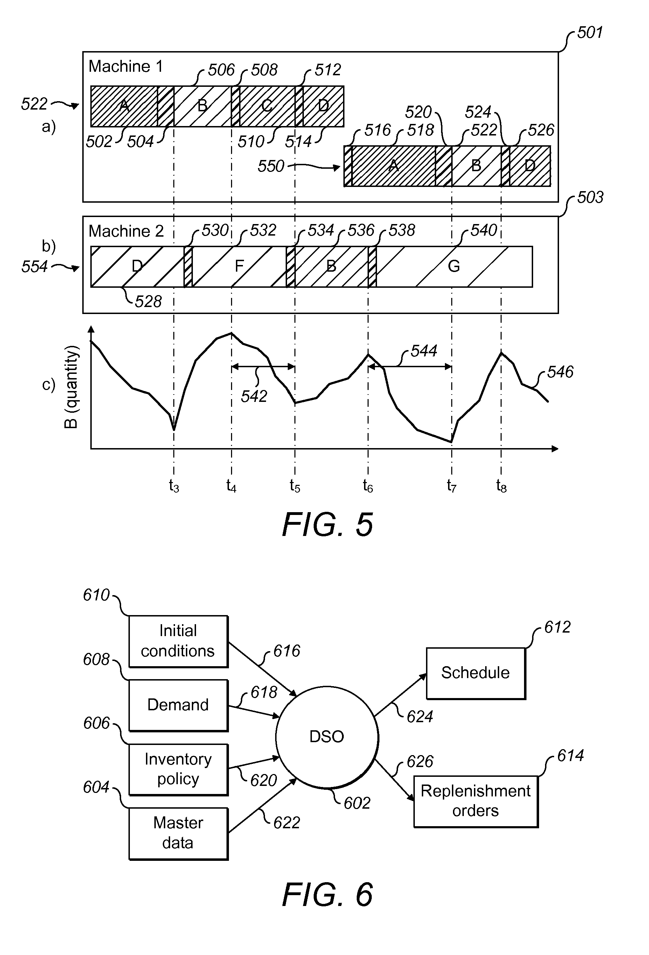

For multi-machine situations, where certain products can be produced on more than one machine, the situation becomes more complex. Referring to Figure 5 there is illustrated an example multi-machine scenario. In Figure 5a, reference numeral 501 generally denotes a first machine, and in Figure 5b reference numeral 503 generally denotes a second machine. For the first machine a first manufacturing cycle 552 is illustrated and a second manufacturing cycle 550 is illustrated. In the same time period a manufacturing cycle 554 of the second machine is illustrated. In the example the first machine is manufacturing products of families A, B, C and D. The second machine is manufacturing products of families E, F, B and G. As can be seen, therefore, products of family B are manufactured in two machines. Thus in the time period illustrated in Figure 5, there are three runs of products of family B over two machines. The graph of Figure 5c illustrates the inventory for products of family B over the time period illustrated. In the time period, the first manufacturing run for product family B ends at time t₄.

The second manufacturing run for product family B begins at time t₅ and ends at time t₆. The third manufacturing run for product family B begins at time t₇. Arrow 542 denotes the time between time t₄ and t₅. Arrow 544 denotes a time between time t₆ and t₇. The time periods denoted by the arrows 542 and 544 are the periods of time over which demand for products of family B must be met by the manufacturing run which has previously taken place for that family of products. The further apart the runs of any particular product, such as the products of family B, the larger the inventory replenishment quantities need to be.
In practice, with current typical techniques, it is not possible to align the manufacturing schedule with demand such that all cust omer service levels are met and production costs minimised simultaneously. The creation of a n optimal manufacturing schedule is a very difficult combinatorial problem, the dimensionality of which overwhelms human capacity. For instance, over a typical 90-day horizon there may well be around 200 blocks for 50 basic materials and 1,000 stock-keeping units. It is estimated that there are more than 10⁸⁰ possible schedules for such a scenario. In multi-machine situations, there are even more possibilities.

There are no known automated techniques for generating optimised manufacturing schedules in these situations, partly because of this combinatorial complexity. In current typical scenarios planners manually create block schedules, which are used in conjunction with demand (forecasts and firm orders) to generate inventory replenishment orders. Some systems are able to determine customer service implications (predicted over - or under-stock and earliness or lateness) in the form of alerts. However the process of handling these alerts and re-scheduling to eliminate them is again resolved manually by planners. The problems are further exacerbated by the fact that the replenishment order creation process can often take a long time, such as an overnight run. Th is slowness for inventory replenishment generation makes the overall system unresponsive to external events.

In summary, therefore, the typical current practice is at a minimum: of unknown quality and likely to be sub-optimal; very slow to respond to external events; and time- and resource-consuming.

With reference to Figure 6 there is illustrated the system inputs and outputs of a technique for determining a manufacturing schedule according to a preferred embodiment of the invention. The block 602 represents a demand schedule optimisation block which implements a demand schedule optimisation process.

Inputs to the demand schedule optimisation block 602 comprise initial conditions 610 as represented by arrow 616, demand 608 as represented by arrow 618, inventory policy 606 as represented by arrow 620, and master data 604 as represented by arrow 622. Outputs from the demand schedule optimisation block comprise a schedule 612 as denoted by arrow 624 and inventory replenishment orders 614 as denoted by arrow 626. The four classes of input to the demand schedule optimisation process, as illustrated in Figure 6, are now described in further detail.
The initial conditions 610 consists of the opening inventory at the beginning of the horizon for each item and also the current production status. Thus the initial conditions allow the current overall status to be used as a starting point for the process. These conditions may be derivable automatically through software tracking current stock levels; and software controlling the manufacturing process itself. The horizon is the time period for which the manufacturing schedule plan will be determined.

The demand 608 consists of the daily forecast consumption rate for each stock -keeping unit. The demand also consists of any firm orders for each stock-keeping unit.

The inventory policy 606 , also known as the demand and inventory policy, includes an inventory policy for each inventory item or stock-keeping unit. The inventory policy is a time -varying policy defined through two levels: a minimum level and a maximum level. These are the levels discussed hereinabove with reference to Figure 2. As discussed with reference to Figure 2, the maximum levels define what may be referred to as a "tunnel". The minimum level may also be referred to as a "safety stock level" and the maximum level may be referred to as a n "order-up-to" level.

In accordance with the demand schedule optimisation process of embodiments of the invention, there are defined four levels associated wit h the inventory. These include the safety stock level defined as a minimum level; the order -up-to stock level defined as a maximum level, and a zero (i.e. no stock) level. In addition there is defined an alarm level as discussed further hereinbelow. There are further defined four penalties associated with the defined levels of the inventory policy. These penalties are expressed as monetary value per day per unit of material. The penalties are labelled as follows :
1. Above maximum level.
2. Below mini mum level.
3. Below alarm level.
4. Below zero level.

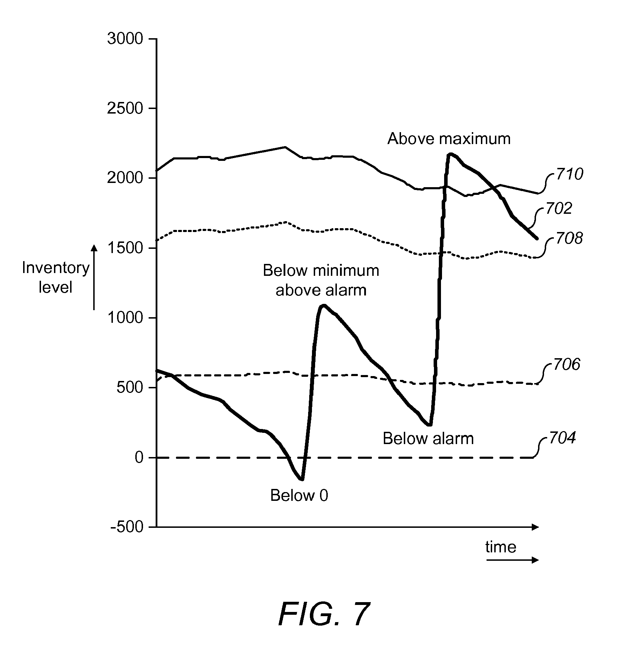

The four levels and the four associated penalties can be further understood with reference to Figure 7. Figure 7 corresponds to Figure 2, in illustrating an inventory level for a particular stock-keeping unit against time. As discussed in relation to Figure 2 there is defined a maximum level 710 and a minimum level 708, between which there is defined the tunnel. Zero level is defined as a constant and denoted by reference numeral 704 and represents a true zero level, i.e. zero stock. In addition, and in accordance with embodiments of the invention, there is defined the alarm level. The alarm level is an additional level introduced in order to provide a further level of control between the minimum and zero levels. The alarm level is shown by line 706 in Figure 7. The alarm level may be defined as a percentage of the minimum level, typically between 50 and 75% of the minimum level. The alarm level may be defined differently for each stock keeping unit, and may vary with time.

The current inventory level in comparison with the four levels defined for the inventory schedule determines whether a penalty condition applies.

In addition to the penalties associated with the inventory policy as discuss ed above, for each make-to-order item earliness and lateness costs are defined to define earliness and lateness penalties. These are also expressed in monetary units per day per unit of material.

The master data 604 includes a number of parameters, such a s production rates, production costs, and any planned downtime. Amongst some of the more complex parameters associated with the master data are:
1. Time-varying production rates due to engineering changes of the underlying process.
2. Ability to schedule around planned downtime.
3. Production capability by exception, and the need to handle by exception. For example it may be specified that a certain product cannot be made on a work centre during a particular period.
4. The ability to take into account pre-defined blocks, for certain long -lead-time operations such as manufacturing trials. The transition into and out of these pre -defined blocks must be managed.
5. Minimum run length by product.
6. Frozen section. For example a part of the original sc hedule may be treated as frozen for a certain amount of time, such as three days, and optimised from that point onwards. The demand schedule optimisation technique may handle different frozen sections for different machines.
7. Production costs. These are important in multi-machine situations when there is an opportunity to switch production of a particular item from one machine to another.
8. Switchover costs and times. Rather than force the user to define a n² matrix of switchovers, the demand schedule optimisation technique preferably employs a rule-based mechanism based on physical properties. Very complex manufacturing situations may be distilled down to a manageable number of rules, which makes the rule -base maintainable by an end user.
9. Multiplicity. When demand is expressed in a unit of measure such as weight or surface area it is sometimes the case that production must be in certain multiples (e.g. whole rolls of paper).

In addition to processing the various classes of inputs as illustrat ed in Figure 6, the demand schedule optimisation technique must apply optimisation processes in order to determine the manufacturing schedule. One important optimisation parameter is the "decay factor". The decay factor captures the requirement that the n ear-term schedule is more important than the far -term one, because of two reasons. Firstly, forecasts become less certain. Secondly, the demand scheduling optimisation technique in practice is applied on a rolling basis, so any scheduling difficulties, e.g., 10 weeks out, can be dealt with next week and the week after. The decay factor is expressed as an exponential half-life, i.e. a value of 40 days means that the objective function penalties at 40 days are half the values they are at the beginning of the schedule.

As illustrated in Figure 6 the primary outputs from the demand schedule optimisation process are the manufacturing block schedules themselves as illustrated by block 612, and any associated inventory replenishment orders as illustrated by block 614. Both these outputs are passed to further systems as will be discussed further hereinbelow. Primarily these outputs are passed to an enterprise resource planning (ERP) system and a manufacturing execution system (MES).

The information gathered by th e demand schedule optimisation process during its execution, such as the number of days below minimum, various costs etc. may also be summarised and presented to a user. Typically this "raw data" is not passed to any further external systems. Because the amount of data collated and analysed is significant, user interface displays are preferably designed to allow any user to view this data in an easily understandable fashion.

Thus data may be presented to a user for a given time period (or horizon), showing a manufacturing schedule for each machine and inventory curves for each stock-keeping units. Inventory replenishment orders may also be displayed.

The demand schedule optimisation technique utilises a process which takes certain parameters as inputs a nd generates certain parameters as outputs. The outputs may be used to control the manufacturing process directly, by controlling manufacturing machinery, and to directly create inventory replenishment orders.

The demand schedule optimisation techniques objective function consists of the sum of the following components:
1. Switchover costs.
2. For inventory items the sum of:
   a. Instances above the maximum inventory target (max_penalty x quantity x days by item);
   b. Instances below the minimum & above the alarm targ et (min_penalty x quantity x days per item);
   c. Instances below the alarm target and above 0 (alarm_penalty x quantity x days per item); and
   d. Instances below 0 (zero_penalty x quantity x days per item).
   To ensure reasonable behaviour it is required that 0 < min_penalty < alarm_penalty < zero_penalty.
   Reference can be made to Figure 7 for when penalties are applied.
3. For make-to-order items the sum of:
   a. Instances of lateness (lateness_penalty x quantity x days per item)
   b. Instances of earliness (earliness_penalty x quantity x days per item)
4. Production costs.

The demand schedule optimisation technique seeks to minimise the sum of these costs.

The components set out above define the 'cost' of any given manufacturing schedule. Typically, as set out above, the system starts from an initial existing schedule. If there is no existing schedule, then the first step of the demand schedule optimisation technique is to construct an initial crude schedule.

The logic is to iterate over time; the first item falling whose projected inventory drops below 0 is assigned production. The next item whose projected inventory drops below 0 is then assigned production, etc.

Constructing a feasible schedule (minimum run length, exception constraints) is not always possible, so infeasible schedules are penalised according to the following scheme.

Each constraint violation is separately penalized by a factor in the objective function: normal objective + penalty1 x violation1 + penalty2 x violation2 + ... . Penalty factors increase as the algorithm enters the infeasible region and decrease when they go out. The purpose of these infeasibility penalties is to provide an incentive for the algorithm to first of all find a feasible (not necessarily minimum cost) schedule.

Once the crude sch edule is generated, satisfying all of the demand, then a move is looked for which improves the objective function. The moves that are considered include the following:
- Run split: a run is split into two sub -runs
- Move Run Left: A run is moved to an earlier position in the schedule. If it is placed adjacent to a run for the same material the two are merged.
- Move Run Right: A run is moved to a later position in the schedule. If it is placed adjacent to a run for the same material the two are merged.
- Quantity left move: Part of the production of a specific stock keeping unit is moved into the previous run of the same product.
- Quantity right move: Part of the production of a specific stock keeping unit is moved into the next run of the same product.
- Create run: a new run is created and placed in the schedule.
- Add Padding: idle time is added at the end of a run
- Remove Padding: idle time is removed from the end of a run

Successful moves (i.e. those that generate an improvement) are adopted and the process is repeated. In order to avoid getting stuck in local minima, non -improving moves are also allowed when no improving move exists. To speed up the algorithm a tabu list of recent moves is used.

A kicking mechanism may also be used, which applies random moves to th e best solution found so far if no improvement has been found in a certain number of iterations, for example the last 50 iterations.

The termination criterion is that either no successful move exists, or the rate of improvement, measured over an appropriately long interval, drops below a user defined value.

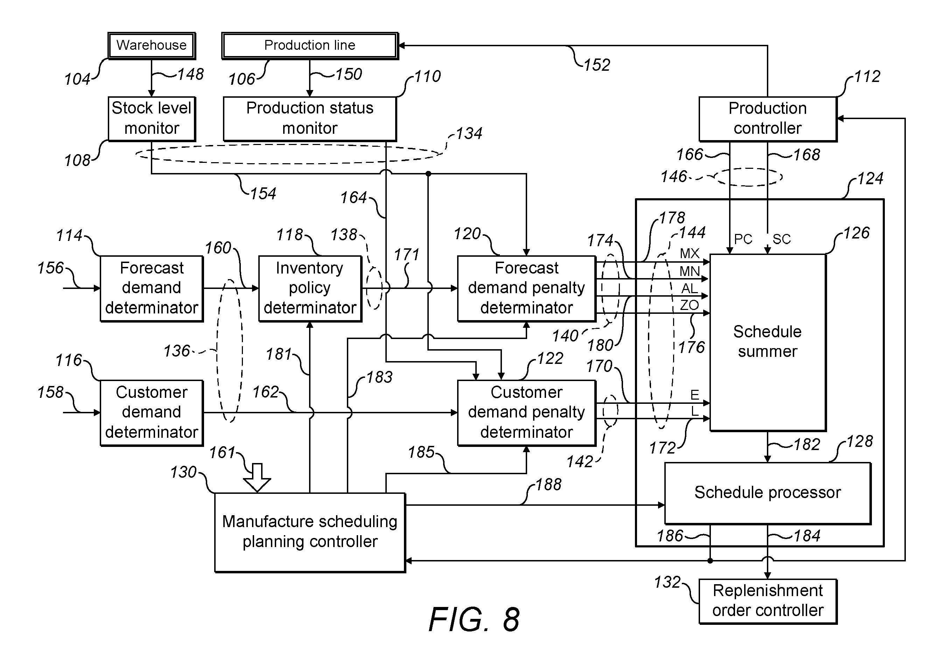

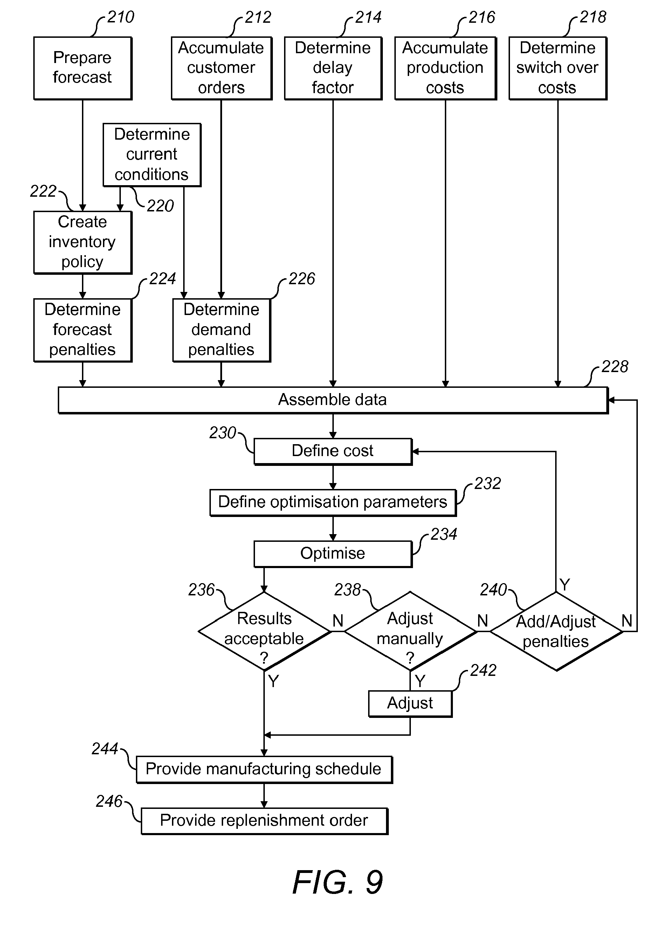

An exemplary system for implementing an embodiment of the invention will now be described with reference to Figure 8, in conjunction with the flowchart of Figure 9 which illustrates an exemplary flow process.

Referring to Figure 8 there is generally shown the function al elements for implementing an embodiment of the invention. In a complete manufacturing system additional function al elements may be required. Furthermore in a complete manufacturing sy stem further interconnections may be required between the function elements illustrated in Figure 8. Only those elements and interconnections need ed for an understanding of an embodiment of the invention are illustrated in Figure 8.

Reference numeral 104 denotes a warehouse facility, which may comprise one or more warehouses or general storage areas, in which products made by the manufacturing process are stored. Reference numeral 106 generally denotes a production line, i.e. the one or more manufacturing production lines, located at one or more sites, for manufacturing products. The remaining elements illustrated in Figure 8 are control or functional elements for determining a manufacturing schedule for the production line 106 and for generating inventory replenishment orders.

Information is presented on a signal line 148 from the warehouse 104 to a stock level monitor element 108. The stock level monitor element 108 provides stock status information on line 154. The information provided on line 148 f rom the warehouse 104 may relate to current stock levels for any given product. This information may be provided by stock keeping software controlled and managed by a warehouse management functionality. On the basis of the information provided on line 14 8, the stock level monitor element 108 is able to provide on line 154 a current stock level for any given product or family of products.

Information from the production line 106 is provided on line 150 to a production status monitor element 110. The production status monitor element 110 provides production status information on line 164. The information received by the production status monitor element 110 on line 150 includes information as to the current status of the manufacturing schedule. This may include an indication of the current point of production in an existing manufacturing schedule, current manufactured product amounts not yet allocated to stock in the warehouse 104, and current part-manufactured products. The information on line 150 may be derived from manufacturing software control in the production line 106. The production status information on line 164 gives a current indication of the status of the production line 106.

In the performance of the demand schedule optimisation technique in accordance with embodiments of the invention, the signals on line 154 and 164 may define initial conditions 134. These initial conditions correspond to the initial condition 610 of Figure 6.

Data associated or necessary for the preparation of a foreca st demand is provided on line 156, labelled as F_DATA. This represents the necessary statistical data in order to prepare a forecast, as known in current techniques. A forecast demand determinator 114 receives the data F_DATA on line 156 and prepares a forecast for a particular product such as the forecast illustrated in Figure 1. This forecast is generated on an output signal line 160 from the forecast demand determinator 114.

Data necessary for assessing all current customer demands is provided on lin e 158, labelled as C_DATA. A customer demand determinator element 116 receives the data C _DATA on line 158. The demand associated with meeting customer service requirements is output by the customer demand determinator element 116 on line 162. The demand information provided on lines 160 and 162 in combination, as denoted by reference numeral 136, constitutes the demand which the manufacturing schedule must meet. This corresponds to the demand 608 illustrated in Figure 6.

The forecast demand on line 16 0 for each product is provided to an inventory policy determinator element 118. An inventory policy for each product, similar to the example policy illustrated in Figure 7, is determined for each stock keeping unit or product. The inventory policy determinator element 118 thus generates inventory policies on line 171 for each stock keeping unit. Generated inventory policies 138 on line 171 correspond to the inventory policy 606 of Figure 6. The inventory policies on line 171 form inputs to a forecast de mand penalty determinator element 120. The forecast demand penalty determinator element 120 additionally receives the stock status information on line 154 from the stock level monitor 108. The forecast demand penalty determinator 120 thus may generate th e alarm signals as illustrated in Figure 7 at the output thereof, in dependence on the determined inventory policy received on line 171 and the current inventory information received on line 154. Thus the forecast demand penalty determinator element 120 generates any one of a over maximum alarm signal MX on line 174, below minimum alarm signal MN on line 178, a below alarm signal AL on line 180, or a below zero alarm signal ZO on line 176. The alarm signals generated by the forecast demand penalty determinator elements 120 may be considered to represent a set of inventory penalties 140.

A customer demand penalty determinator element 122 receives the demand associated with customer orders on line 162. In addition the customer demand penalty determinator 1 22 receives the current stock level on line 154 from the stock level monitor 108 and current production status information on line 164 from the production status monitor elements 110. Together with the current stock level information and the current production status information, the customer demand penalty determinator 122 is able to determinate whether a customer order will be met on time, early or late. Meeting a customer order on time may be considered to be within a certain number of days either side of the actual intended delivery date. Having a customer order ready early incurs penalties due to the need to store such order before delivery. In the event of the customer demand penalty determinator element 122 determining that an early penalty condition applies, an early penalty signal E is generated on line 170. The customer demand penalty determinator element 122 is also able to determine if a particular customer order is to be delivered late, and may generate an appropriate late penalty signal L o n line 172. The early penalty signal E and the late penalty signal L in combination may be considered as make-to-order penalties 142.

The inventory penalties 140 and the make -to-order penalties 142 in combination may be considered to be production penalties 144. A production controller element 112 represents a controller associated with the control of the production line 106. For the purposes of understanding this embodiment of the invention the production controller 112 generates a signal on line 166 representing production costs PC, and a signal on line 168 representing switchover costs SC. The production costs and switchover costs in combination may be considered to be master data 146. The production costs and switchover costs correspond to the mast er data 604 of Figure 6.

A demand schedule optimisation controller 124 receives the production penalties information 144 and the master data information 146 as inputs. These inputs are all provided to a schedule summer 126 of the demand schedule optimisation controller 124. The schedule summer 126 sums the costs and penalties received as its inputs and provides these to a schedule processor 128 on line 182, the schedule processor 128 forming a further part of the demand schedule optimisation controller. The schedule processor 128 implements the optimisation technique in accordance with embodiments of the invention, as will be described further with reference to Figure 9. The schedule processor 128 receives a decay value DECAY on line 188 from a manufacture scheduling planning controller 130. This decay value, which is discussed hereinabove, is determined by the manufacture scheduling planning controller 130.

The manufacture scheduling planning controller 130 generates control signals on lines 181, 183, and 185 to each of the inventory policy determinator elements 118, the forecast demand penalty determinator element 120, and customer demand penalty determinator elements 122 respectively. This enables the manufacture scheduling planning controller to ad just alarm levels, penalty conditions etc.

The schedule processor 128 of the demand schedule optimisation controller 124 generates two outputs on lines 184 and 186.

On line 186 the schedule processor 128 generates a manufacturing schedule for implementat ion by the production line 106. This schedule is provided directly to the production controller 112 for direct implementation on the production line 106. This allows the production controller 112 to operate in an automated fashion to adapt the manufactur ing schedule of the production line 106 in accordance with the outcome of the demand schedule optimisation technique.

The output of the schedule processor on line 186 is also prov ided to the manufacture scheduling planning controller, so that the results of the schedule optimisation can be reviewed. The manufacture scheduling planning controller 130 also receives various raw data as generally illustrated by input arrow 161, such that any raw data present at any point in the system of Figure 8 may be provided for review.

The output of the schedule processor on line 184 is provided to a n inventory replenishment order controller 132, and represents information necessary for the reordering of raw materials to support the production or manufacturing process. The information on line 184 may be used by a replenishment order controller 132 such as to provide automated ordering, or to provide an order form to be further processed.

Referring now to Figure 9 the general process implemented by the system architecture of Figure 8 is illustrated for further understanding of an embodiment of the invention.

As illustrated by Figure 9, in a step 210 a forecast is prepared. Following preparation of the forecast, in a step 222 an inventory policy is created. It will be un derstood that a forecast is prepared, and an inventory policy created, for each product or stock keeping unit to be manufactured in the manufacturing process. After the creation of the inventory policy in step 222, forecast penalties for the inventory pol icy are determined in a step 224. The thus created data is provided to an assembled data step 228. In a step 220 current conditions, namely current inventory levels, are determined and provided for consideration in the creation of the inventory policy in step 222.

In a step 212 any received customer orders are accumulated. In a step 226 demand penalties associated with such customer orders are determined. Current conditions determined in step 220, being current inventory levels and current status of th e manufacturing process, are taken into consideration in determining the demand penalties in step 226. The thus generated data is then provided to the assembled data step 228.

As represented by step 214 a decay factor value is determined. This may be de termined by any number of ways, including by manual input. This value is provided to the assembled data step 228.

In a step 216 production costs are accumulated, and then provided to the assembled data step 228.

In step 218 switchover costs are determin ed for switching between various ones of the products involved in the manufacturing process. This data is then provided to the assembled data step 228. The switchover costs determined in step 218 may, in practice, be determined as part of the production costs in step 216.

After the data is assembled in step 228, in a step 230 the associated cost is determined. Thereafter in step 232 appropriate optimisation parameters are defined. In step 234 the process is then optimised.

In step 236 it is then determined whether the results achieved by the optimisation process are acceptable. This is effectively the step of determining whether a feasible schedule has been constructed, as discussed hereinabove.

If the results are acceptable, then the process moves o n to step 244 and the manufacturing schedule thus generated is provided in a step 244, and then in a step 246 the appropriate generated inventory replenishment orders are also provided.

If in step 236 it is determined that the obtained results are not acc eptable, then in a step 238 it may be determined whether the results should be adjusted manually. The system presents a number of key performance indicators to allow the user to make an informed choice. Such indicators include the total amount of inventor y, its value, the total magnitude of inventory items below zero / below alarm / below minimum / above maximum (measured in monetary units), the number of late orders, the cumulative lateness, etc. The user may then adjust the schedule, by moving runs, by adjusting their size, etc. Each intervention gives rise to an alternative schedule and this is evaluated using the same key performance indicators. Multiple such "what -if" scenarios can be generated and compared. In such cases following an adjustment step 242, the manufacturing schedule is provided in step 244 and the inventory replenishment order provided in step 246.

If manual adjustment is determined not to be appropriate in step 238, then in a step 240 it is determined whether penalties should be adjus ted. For instance a late order may have its lateness penalty increased, or an item whose projected inventory drops below the alarm level may have its alarm penalty increased . Step 240 allows for the adjustment of existing penalties which have been previously applied in the optimisation process. If penalties are to be adjusted in step 240, then following such adjustments the process returns to step 230.

If penalties are not to be adjusted in step 240, then the process returns to step 228.

The processor Figure 9 therefore represents the demand schedule optimisation technique described hereinabove, the implementation of which may vary in accordance with desired embodiments and a particular manufacturing process being optimised.

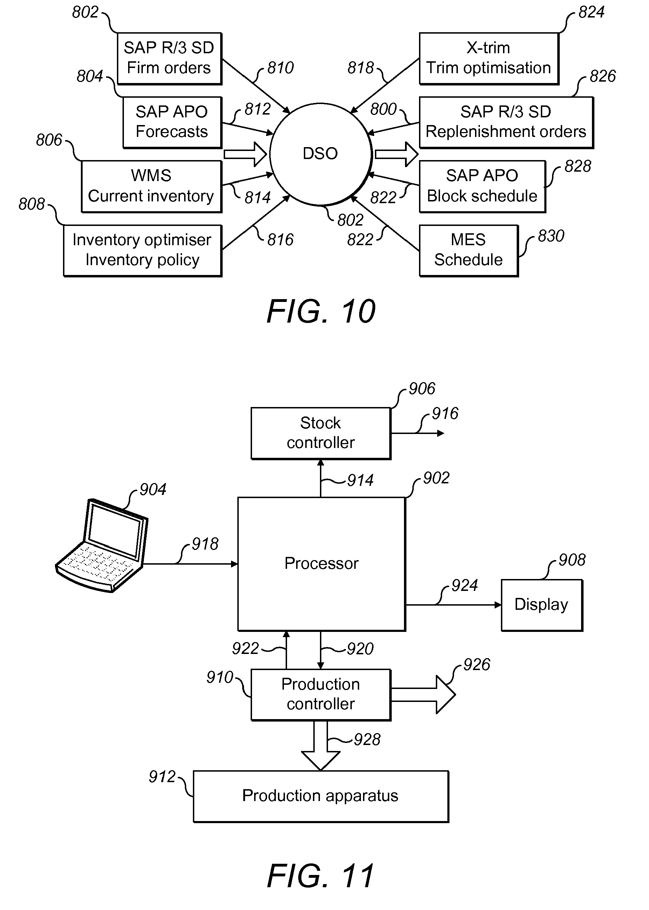

With reference to Figure 10 there is shown the inputs to a demand schedule optimisation and the outputs from a demand schedule optimisation in accordance with an alternative embodiment of the invention. The demand schedule optimisation process is denoted by reference numeral 801. The demand schedule optimisation process 801 receives firm orders 802 as denoted by arrow 810 as a first input, forecast 804 as denoted by arrow 812 as a second input, current inventory 806 as denoted by arrow 814 as a third input, and inventory policy 808 as denoted by arrow 816 as a fourth input. The demand schedule optimisation generates trim optimisation outputs 824 as denoted by arrow 818 , inventory replenishment order 826 as denoted by arrow 820, block schedule 828 as denoted by arrow 822, and a schedule 830 as denoted by arrow 822.

Figure 10 illustrates a typical integration of the demand schedule optimisation process in a typical advance planning system. Integration of the demand schedule optimisation process 801 may typically be via XML messages for communication with other entities associated with the manufacturing process.

Referring to Figure 11 there is illustrated the overall interaction of the demand schedule optimisation technique with the control systems for the manufacturing process and other associated control systems.

Referring to Figure 11 there is illustrated generally by a block 912 a production apparatus. This represents the production machinery for any given manufacturing process. By way of example the manufacturing process may b e a paper manufacturing process, and the production apparatus 912 may be the appropriate machinery for manufacturing paper. The production apparatus 912 may consist of one or more sets of apparatus for producing one or more manufacturing runs.

The production apparatus 912 runs under the control of a production controller 910, which generate control signals to the production apparatus 912 on lines 928. The production controller 910 additionally generates further control signals on lines 926. The product ion controller 910 is adapted to interact with a processor 902. The processor 902 generates one or more signals to the production controller 910 as represented by signal line 920, and receives one or more signals from the production controller 910 as repr esented by line 922. The processor 902 may generate drive signals on line 924 to a display 908. The processor 902 may further generate control signals on line 914 to a stock controller 906. The stock controller 906 may further communicate with other elements as represented by the output signals on line 916 from the stock controller 906. The processor 902 further receives signals on at least one signal line 918 from a computer 904. The communication between the computer 904 and the processor 902 may be bi-directional.

## Claims

1. A computer- implemented method for scheduling a manufacturing process for manufacturing a plurality of items, the method comprising:
a. determining costs associated with switching the manufacturing process between different items;
b. determining a set of costs associated with an inventory level for each item deviating outside predefined parameters associated with a demand forecast;
c. determining a set of costs associated with a customer order being delivered outside of a delivery date;
d. determining a set of production costs;
e. determining a set of all possible manufacturing schedules for the combination of products to meet customer demand and the demand forecasts;
f. for each schedule determining a cost;
g. selecting a schedule which acceptably minimises the determined cost.

2. The method of claim 1 wherein if a schedule does not meet the various constraints, it is penalised.

3. The method of claim 1 or claim 2 further comprising the step, after selecting a schedule, of seeking an improved schedule.

4. The method of claim 3 wherein the step of seeking an improved schedule comprises reordering the selected schedule and determining if the reordering reduces the cost.

5. The method of any one of claims 1 to 4 wherein the set of costs associated with the inventory level include a penalty costs associated with the inventory level falling below a level which is defined as a percentage of a safety stock level.

6. A computer-implemented method for scheduling a manufacturing process for manufacturing one or more items, comprising:
a. determining a set of input parameters, comprising:
i. determining a set of initial conditions;
ii. determining a demand;
iii. determining an inventory policy for each item;
iv. determining a set of master data;
b. determining a decay factor;
c. processing the input parameters;
d. generating output parameters in dependence on the input parameters, comprising:
i. a manufacturing schedule.

7. The method of claim 6, wherein the initial conditions include an opening inventory for each item.

8. The method of claim 6 or claim 7, wherein the initial conditions include pre-defined runs for a subset of the items.

9. The method of any one of claims 6 to 8, wherein the demand includes a daily forecast consumption rate for each item.

10. The method of any one of claims 6 to 9 , wherein the demand includes orders.

11. The method of any one of claims 6 to 10 , wherein the step of defining an inventory policy for each item includes defining a maximum level.

12. The method of any one of claims 6 to 11 , wherein a first penalty condition is met if the inventory level for an item exceeds the maximum level.

13. The method of any one of claims 6 to 12 , wherein the step of defining an inventory policy for each item includes defining a minimum level.

14. The method of claim 13, wherein a second penalty condition is m et if the inventory level for an item is less than the minimum level.

15. The method of any one of claims 6 to 14 , wherein the step of defining an inventory policy for each item includes defining an alarm level.

16. The method of claim 15, wherein a third penalty condition is met if the inventory level for an item is less than the alarm level.

17. The method of claim 15, wherein the alarm level is defined as a percentage of the minimum level.

18. The method of any one of claims 6 to 17, wherein a fourth penalty cond ition is met if the inventory level is below zero.

19. The method of any one of claims 6 to 18, wherein the step of defining an inventory policy includes defining an earliness penalty.

20. The method of any one of claims 6 to 19 , wherein the step of defining a n inventory policy includes defining a lateness penalty.

21. The method of any one of claims 13 to 15 wherein the defined level is time -varying.

22. The method of any one of claims 12, 14, 16, 18, 19 or 20 wherein the defined penalty is time-varying.

23. The method of any one of claims 6 to 22 wherein the step of determining master data includes determining a production rate for each item and allowing this production rate to vary over time.

24. The method of any one of claims 6 to 23 wherein the step of determining master data includes determining a production cost for each item.

25. The method of any one of claims 6 to 24 wherein the step of determining master data includes planned down -time of the manufacturing process.

26. The method of any one of claims 6 to 25 wherein the step of determining the decay factor includes penalising parts of the schedule further in the future.

27. The method of any one of claims 6 to 26 wherein the step of generating output parameters includes generating a n inventory replenishment order.

28. The method of any one of claims 6 to 27 wherein the step of generating output parameters includes displaying one or more input parameters.

29. The method of claim 11 or claim 13 wherein the step of processing the input parameters includes maintaining the inventory level for each item above its defined minimum level and below its defined maximum level.

30. A computer program product for storing computer program code for carrying out the method of any preceding claim.

31. A system for scheduling a manufacturing pro cess for manufacturing a plurality of items, the system comprising:
a. a determinator for determining costs associated with switching the manufacturing process between different items;
b. a determinator for determining a set of costs associated with an inventor y level for each item deviating outside predefined parameters associated with a demand forecast;
c. a determinator for determining a set of costs associated with a customer order being delivered outside of a delivery date;
d. a determinator for determining a set of production costs;
e. a processor for determining a set of all possible manufacturing schedules for the combination of products to meet customer demand and the demand forecasts;
f. wherein for each schedule the processor determines a cost;
g. and wherein the processor selects the schedule associated with the minimum determined cost.

32. The system of claim 31 wherein the processor transmits the selected schedule to a production controller for controlling the production process.
